**Europäisches Patentamt**

**European Patent Office**

**Office européen des brevets**

(19)

(11) Veröffentlichungsnummer: **0 245 599 B1**

(12) # EUROPÄISCHE PATENTSCHRIFT

(45) Veröffentlichungstag der Patentschrift: **19.06.91**

(51) Int. Cl.⁵: **F16L 33/20**, F16L 47/00

(21) Anmeldenummer: **87102959.1**

(22) Anmeldetag: **02.03.87**

(54) Zweiteiliger metallischer Klemmverbinder.

(30) Priorität: **17.03.86 DE 3608843**

(43) Veröffentlichungstag der Anmeldung:
**19.11.87 Patentblatt 87/47**

(45) Bekanntmachung des Hinweises auf die
Patenterteilung:
**19.06.91 Patentblatt 91/25**

(84) Benannte Vertragsstaaten:
**AT BE CH ES FR GB GR IT LI NL**

(56) Entgegenhaltungen:
**DE-A- 1 775 720**
**DE-A- 2 149 136**
**DE-A- 2 908 935**
**DE-A- 3 122 709**
**US-A- 4 293 147**

(73) Patentinhaber: **REHAU AG + Co**
**Rheniumhaus**
**W-8673 Rehau(DE)**

(72) Erfinder: **Der Erfinder hat auf seine Nennung
verzichtet**

EP 0 245 599 B1

## Beschreibung

Die Erfindung betrifft ein Verfahren zur Herstellung einer Klemmverbindung für Rohre und Schläuche aus polymeren Werkstoffen, wobei ein als zylindrische Rohrhülse ausgebildetes Verbindungsstück mit seinem am Außenumfang gerippten Steckbereich in das Rohr- bzw. Schlauchende eingesetzt und danach eine axial zur Rohrachse bewegliche zylindrische Schiebehülse unter Herstellung der Klemmverbindung über das Rohr- bzw. Schlauchende mit dem eingesetzten Steckbereich aufgepresst wird.

Aus der DE-A-21 49 136 ist ein Schlauchverbinder mit einer rohrförmigen Einstecktülle und einem der Einstecktülle überlagerten Spannring bekannt geworden, wobei dieser Spannring axial gegenüber der Einstecktülle verstellbar ist. Die Einstecktülle weist dabei einen gegen ihr freies Ende zunehmenden Durchmesser und der Spannring eine konische Innenbohrung auf, welche gegen das freie Ende der Einstecktülle erweitert ist. Bei dem Schlauchverbinder des Standes der Technik ist der Unterschied zwischen dem kleinsten Radius der konischen Innenbohrung des Spannringes und dem größten Radius der Einstecktülle kleiner als die Wanddicke des Schlauches ausgeführt. Dieser Schlauch wird auf die Einstecktülle aufgeschoben und daraufhin durch axiales Verschieben des Spannringes auf der Einstecktülle festgespannt.

Der bekannte Klemmverbinder hat den Nachteil, daß sich beim Betrieb die konische Klemmhülse vom Rohr lösen kann, wodurch die Klemmverbindung undicht wird.

Bei einem Rohr aus vernetztem Polyethylen erklärt sich dieser Vorgang so, daß das im Bereich der Klemmverbindung eingespannte vernetzte Polyethylen das Bestreben hat, sich zu dehnen. Daran wird das Rohr durch die aufgespannte konische Klemmhülse gehindert. Bei Wechseltemperaturbeanspruchungen, z.B. bei der Abkühlung nach der Durchleitung von warmen Fluiden, schrumpft der Bereich des eingeklemmten Polyethylen-Rohres entsprechend der Temperaturdifferenz zurück. Dadurch kann es zu einer Spaltbildung zwischen der Klemmhülse und dem Rohr aus vernetztem Polyethylen kommen. Bei der nächsten Druckbeaufschlagung kann es dann zum Herausschieben des vernetzten Polyethylen-Rohres aus dem Klemmverbinder kommen.

Es sind weitere Klemmverbinder bekannt, die auf der Basis einer Schraubverbindung beruhen. Hierbei wird mit einem geschlitzten Klemmring gearbeitet, welcher über eine Überwurfmutter mit dem Gewindeteil der Stützhülse zusammenwirkend bei der Herstellung der Schraubverbindung die Klemmwirkung herbeiführt. Die Rohrwandung wird dabei zwischen dem äußeren Umfang der Stützhülse und der Innenwandung der zweigeteilten Klemmhülse verspannt.

Der Nachteil dieser bekannten Art von Klemmverbindern ist darin zu sehen, daß bei herstellungsbedingter Exzentrität der Kunststoffrohre der Klemmring beim Anziehen mittels der Überwurfmutter verkanten kann. Auf diese Weise läßt sich demnach keine auf Dauer dichte Klemmverbindung erzeugen. Ein weiterer Nachteil ist darin zu sehen, daß durch die Verwendung der Schraubverbindung das Erfordernis einer unlösbaren Verbindung mit diesem Klemmverbinder des Standes der Technik nicht erfüllbar ist.

Ferner ist aus der US-A-4293147 ein Verfahren zur Herstellung einer Klemmverbindung bekannt, das alle Merkmale des Oberbegriffs des Anspruchs 1 enthält.

Hier setzt die Erfindung ein, die es sich zur Aufgabe gestellt hat, die aufgezeigten Nachteile des Standes der Technik zu vermeiden und ein Verfahren zur Herstellung einer Klemmverbindung anzugeben, die zum einen auf Dauer dicht ist und zum anderen das Erfordernis der Unlösbarkeit erfüllt. Erfindungsgemäß wird dazu vorgeschlagen, daß das Rohr- bzw. Schlauchende vor dem Einsetzen des Steckbereiches auf dessen äußeren Umfang bis zum Umfang der Rippen aufgeweitet wird, und daß der Innendurchmesser der Schiebehülse kleiner ausgeführt wird als der Außendurchmesser des aufgeweiteten Rohrendes.

Der Vorteil des erfindungsgemäßen Verfahrens wird gegenüber dem bekannten Stand der Technik darin gesehen, daß durch die Aufweitung des Rohrendes bis zum Umfang der Rippen des Steckbereiches der lichte Durchmesser des als Rohrhülse ausgebildeten Verbindungsstückes dem lichten Durchmesser des Kunststoffrohres angepaßt werden kann. Durch diese Maßnahmen werden Strömungsverluste und Geräusche ausgeschlossen und die Gefahr einer Erosions-Korrosion wird extrem verringert.

Als weiterer Vorteil wird hervorgehoben, daß die Klemmverbindung nach der Erfindung eindeutig unlösbar ist. Darüber hinaus ist die Montage des erfindungsgemäßen Klemmverbinders einfach. Nach dem Aufweiten des Schlauchendes wird der Steckbereich des Verbindungsstückes in das aufgeweitete Schlauchende eingeschoben. Die zylindrische Schiebehülse ist vorher auf den äußeren Schlauchumfang aufgeschoben.

Nach dem Einbringen des Steckbereiches wird die Schiebehülse mit einem einfachen Werkzeug bis zum Anschlag an den Flanschansatz geschoben. Damit ist die Montage beendet. Es entfällt also jegliches Schrauben und dadurch bedingtes Festziehen geteilter Klemmringe sowie die Verwendung von konischen Verbindungsteilen.

Es erscheint ferner zweckmäßig, daß bei der Herstellung der Klemmverbindung die über die Schiebehülse aufgebrachte Anpreßkraft durch die Rückschrumpfkraft des aufgeweiteten, polymeren Werkstoffes zusätzlich unterstützt wird.

Es hat sich weiter als vorteilhaft herausgestellt, daß wenigstens die Rippen am freien Ende des Steckbereiches an ihrem äußeren Umfang eine Profilierung aufweist. Auf diese Weise wird eine zusätzliche Verschiebe- und Verdrehsicherung erzeugt.

Weiterhin besitzt die Schiebehülse an ihrem zum Steckbereich gerichteten freien Ende eine Aufkelchung. Nachdem der Innendurchmesser der Schiebehülse kleiner ist als der Aussendurchmesser des aufgeweiteten Rohrendes, bewirkt diese Aufkelchung ein einfaches anfängliches Aufsetzen der Schiebehülse auf das aufgeweitete Schlauchende. Im weiteren Verlauf der Verschiebung der Schiebehülse wirkt dann deren kleinerer Innendurchmesser auf den größeren Außendurchmesser des aufgeweiteten Rohrendes derart, daß das Rohrwandmaterial im Verlaufe der Verschiebung in die nutenförmigen Vertiefungen eingepresst wird.

Die Schiebehülse kann ferner wenigstens gegenüber der nutenförmigen Vertiefung des Steckbereiches, die im Bereich des freien Endes liegt, an ihrem inneren Umfang eine Profilierung aufweisen.

Auch solche Profilierungen können der zusätzlichen Verschiebe-und Verdrehsicherung dienen.

Die Schiebehülse kann geringfügig länger ausgebildet sein als der Steckbereich des Verbindungsstückes, wodurch der gesamte Bereich der Rohraufweitung abgedeckt wird. Das Verbindungsstück weist vorteilhaft im Anschluß an den Steckbereich einen umlaufenden Flanschansatz auf, welcher als Anschlag für das aufzuschiebende Rohrende und für die Schiebehülse dient. Im Anschluß an diesen Flanschansatz kann das Verbindungsstück dann einen Gewindeteil besitzen, über den eine Gewindeverbindung zu einer Rohrverlängerung, zu einem Formteil usw. herstellbar ist; es können auch T-Stücke, Kupplungen usw. auf Basis des Verbindungsstückes gebildet werden.

Das in dieser Klemmverbindung verwendete Rohr bzw. der damit zu verbindende Schlauch kann aus thermoplastischem Kunststoff oder auch aus thermoplastisch-elastomerem Kunststoff wie vernetztem Polyethylen bestehen.

In der Zeichnung ist der Klemmverbinder der Erfindung schematisch dargestellt; es zeigt:
Fig. 1 eine Explosionsdarstellung der Einzelteile des Klemmverbinders.
Fig. 2 einen Querschnitt durch eine Klemmverbindung mit dem Klemmverbinder.

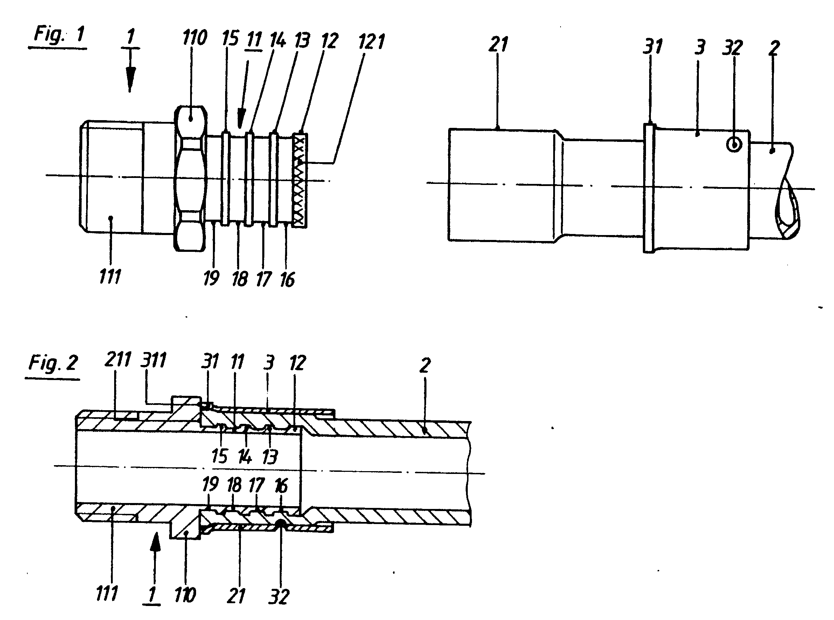

In Fig. 1 ist in linker Darstellung das Verbindungsstück 1 gezeigt. Dieses Verbindungsstück 1 besteht aus dem Gewindeteil 111, aus dem Flanschansatz 110 und dem Steckbereich 11.

Das Gewindeteil 111 kann ein Außen- oder Innengewinde aufweisen, je nachdem, wie die weiteren Verbindungsstücke gestaltet sind. Der Flanschansatz 110 kann ein rundumlaufender Ring mit glatter Oberfläche sein, es können am äußeren Umfang jedoch auch regelmäßige Flächen abgearbeitet sein, wodurch der Ansatz von Arbeitswerkzeugen wie Maulschlüsseln ermöglicht wird. Der Steckbereich 11 zeigt die am äußeren Umfang im Abstand voneinander angeordneten Rippen 12, 13, 14, 15, die zwischen sich die Nuten 16, 17, 18, 19 einschließen. Die Nut 19 ist dabei von der Rippe 15 einerseits und dem Flanschansatz 110 andererseits begrenzt. In der Darstellung weist die Rippe 12 an ihrem äußeren Umfang eine als Rändelung gezeigte Profilierung 121 auf.

Das Verbindungsstück 1 kann einstückig aus Metall oder Kunststoff geformt sein.

In Achsrichtung schließt sich nach rechts der Kunststoffschlauch/das Kunststoffrohr 2 an, welches mit seinem aufgeweiteten Bereich 21 in unmittelbarer Nähe der Rippe 12 des Steckbereichs 11 dargestellt ist. Über den Kunststoffschlauch/das Kunststoffrohr 2 ist die Schiebehülse 3 geschoben, welche mit ihrer Aufkelchung 31 in der Nähe des Beginns der Aufweitung 21 auf der Oberfläche des Kunststoffschlauches/Kunststoffrohres 2 sitzt. Die Schiebehülse 3 weist in der gezeigten Darstellung eine Eindrückung auf, die sich nach innen zur Oberfläche des Kunststoffschlauches/Kunststoffrohres 2 als Profilierung 32 auswirkt.

Fig. 2 zeigt den Querschnitt durch eine hergestellte Klemmverbindung mit dem erfindungsgemäßen Klemmverbinder im Schnitt. Das aufgeweitete Rohrende 21 ist dabei auf den Steckbereich 11 des Verbindungsstückes 1 so weit aufgeschoben, bis die Stirnwand 211 an den zugeordneten Wandbereich des Flanschansatzes 110 anstößt.

Danach ist die Schiebehülse 3 ebenfalls über das aufgeweitete Rohrende 21 und den Steckbereich 11 so weit aufgeschoben worden, bis ihre Stirnwand 311 den zugeordneten Wandbereich des Flanschansatzes 110 berührt. Während dieses Aufschiebevorgangs wird aufgrund der Tatsache, daß der Innendurchmesser der Schiebehülse 3 kleiner ist als der Außendurchmesser des aufgeweiteten, auf den Steckbereich 11 aufgesteckten Bereichs des Rohrendes 21 das Kunststoffmaterial des Schlauches/Rohres 2 zunehmend in die nutenförmigen Vertiefungen 16, 17, 18, 19 eingepresst. Diese Verfüllung des Nutenquerschnitts mit dem Kunststoffmaterial des Schlauches/Rohres 2 bewirkt eine dauerhafte Verklemmung des Schlauches/Rohres 2 auf dem Steckbereich 11 des Klemmverbinders. Die Profilierungen 121 auf der Rippe 12 sowie 32 in der Schiebehülse 3 bewirken eine zusätzliche Verspannung und damit Sicherung der hergestellten Klemmverbindung.

Die erfindungsgemäße Klemmverbindung macht sich neben der Presskraft der Schiebehülse 3 die Tatsache zunutze, daß dem Kunststoffmaterial des Schlauches/Rohres 2 durch die Aufweitung des Rohrendes 21 eine Rückschrumpfkraft innewohnt, die bei der Verwendung von thermoplastischen Kunststoffen mittels Wärmezuführung aktiviert werden kann. Bei der Verwendung von vernetztem Polyethylen setzt der Rückschrumpf fast unmittelbar nach Durchführung des Aufweitvorganges ein. Bei diesem Kunststoffmaterial kann die Aufweitung bis zum Bereich der Streckgrenze des vernetzten Polyethylens durchgeführt werden, wodurch auch nach dem Rückschrumpf ein größerer Durchmesser erzielt werden kann als vor der Aufweitung. Diese Maßnahme bringt den Vorteil, daß die lichte Weite der Rohrhülse des Verbindungsstückes 1 der lichten Weite des Kunststoffschlauches/Rohres 2 angepaßt werden kann.

In diesem Fall erfolgt der Rückschrumpf nach Einstecken des Steckbereiches 11 in das aufgeweitete Rohrende 21 auch ohne Wärmezuführung und die gleichzeitige Einsetzung des Verschiebevorgangs mit der Schiebehülse 3 kann diese Rückschrumpfvorgänge unterstützen.

## Ansprüche

1. Verfahren zur Herstellung einer Klemmverbindung für Rohre und Schläuche aus polymeren Werkstoffen, wobei ein als zylindrische Rohrhülse ausgebildetes Verbindungsstück mit seinem am Außenumfang gerippten Steckbereich in das Rohr- bzw. Schlauchende eingesetzt und danach eine axial zur Rohrachse bewegliche zylindrische Schiebehülse unter Herstellung der Klemmverbindung über das Rohr- bzw. Schlauchende mit dem eingesetzten Steckbereich aufgepresst wird, und wobei der gesamte Steckbereich (11) am äußeren Umfang rundumlaufende, nach außen abgeflachte Rippen (12, 13, 14, 15, 110) mit jeweils zwischen zwei benachbarten Rippen (12-13, 13-14, 14-15, 15-110) angeordneten, nutenförmigen Vertiefungen (16, 17, 18, 19) versehen wird, dadurch gekennzeichnet, daß das Rohr- bzw. Schlauchende vor dem Einsetzen des Steckbereiches auf dessen äußeren Umfang bis zum Umfang der Rippen (12, 13, 14, 15) aufgeweitet wird, und daß der Innendurchmesser der Schiebehülse (3) kleiner ausgeführt wird als der Außendurchmesser des aufgeweiteten Rohrendes (21).

2. Verfahren nach Anspruch 1, dadurch gekennzeichnet, daß bei der Herstellung der Klemmverbindung die über die Schiebehülse aufgebrachte Anpresskraft durch die Rückschrumpfkraft des aufgeweiteten, polymeren Werkstoffes zusätzlich unterstützt wird.

## Claims

1. Method of making a compression joint for polymer pipes and hoses whereby a connection piece designed in the form of a cylindrical tubular sleeve is inserted with its externally ribbed spigot section into the pipe or hose end and a movable cylindrical compression sleeve running parallel to the pipe axis is forced over the pipe or hose end onto the inserted spigot section to form the compression joint and whereby the outer circumference of the entire inserted spigot section (11) is provided with outwardly flattened ribs (12, 13, 14, 15, 110) with groove-shaped depressions (16, 17, 18, 19) arranged between two adjacent ribs (12-13, 13-14, 14-15, 15-110), characterised by the fact that before insertion of the spigot section, the outer circumference of the pipe or hose end is widened to the circumference of the ribs (12, 13, 14, 15) and that the inner diameter of the compression sleeve (3) is smaller than the outer diameter of the widened pipe end (21).

2. Method as described in claim 1, characterised by the fact that on forming the compression joint, the compression force applied to the compression sleeve is additionally supported by the resilience of the widened polymer material.

## Revendications

1. Processus de réalisation d'un assemblage par serrage pour tubes et tuyaux en matières polymères, une partie du raccord constituée comme un couvre-joint tubulaire cylindrique étant placée dans l'extrémité du tube, voire du tuyau, du côté de sa zone d'emboîtement nervurée à la périphérie extérieure, un manchon à sertir cylindrique mobile longitudinalement par rapport à l'axe du tube est ensuite emmanché par pression sur l'extrémité du tube, voire du tuyau, du côté de la zone d'emboîtement, en établissant l'assemblage par serrage, toute la zone d'emboîtement (11) sur la périphérie extérieure étant munie de nervures aplaties vers l'extérieur (12, 13, 14, 15, 110) avec à chaque fois des creux en forme de rainures (16, 17, 18, 19) disposés entre deux nervures contiguës (12-13, 13-14, 14-15, 15-110), ceci caractérisé par le fait que l'extrémité du tube, voire du tuyau est élargie avant la pose de la zone d'emboîtement sur la périphérie extérieure jusqu'à la périphérie des nervures (12, 13, 14, 15) et par le fait que le diamètre intérieur du manchon à sertir (3) est réalisé plus petit que le diamètre extérieur de l'extrémité élargie du tube (21).

2. Processus selon la revendication 1, caractérisé par le fait que lors de la réalisation de l'assemblage par serrage la force de pression exercée sur le manchon à sertir est complétée par la force de retrait de la matière polymère élargie.

Fig. 1

Fig. 2